# EUROPEAN PATENT APPLICATION

(11) **EP 1 096 730 A1**
(43) Date of publication of application: **02.05.2001**
(21) Application number: 99926909.5
(22) Date of filing: 02.07.1999
(51) Int. Cl.: H04L 12/28

(54) **CHANNEL SELECTING METHOD**

(30) Priority: 06.07.1998 JP 19018998
(71) Applicant: NEC Corporation, Minato-ku, Tokyo 108-0014 (JP)
(72) Inventor: ISHII, Kenichi, NEC Corporation, Tokyo 108-0014 (JP); OSAWA, Tomoki, NEC Corporation, Tokyo 108-0014 (JP)
(74) Representative: VOSSIUS & PARTNER
(86) International application number: JP9903590
(87) International publication number: WO0002353

(57) **Abstract**

A channel selection method is provided to share a frequency band efficiently in local radio communication system and other radio communication systems. The use of each selectable channel in local radio communication system 10A is examined (step 302). Interference wave powers, for example, as the use of channels in another radio communication system 10B is also examined (step 303). A channel for use in a radio communication at local radio communication system 10A is selected based on the results examined on all channels.

## Description

### Technical Field

The present invention relates to a channel selection method in a radio communication system, and more particularly to a channel selection method for selecting a channel for use in a radio communication from a plurality of selectable channels including channels to be shared by plurality of radio communication systems.

### Background Art

Radio communication systems that have been studied recently to realize a high-speed data transmission by wireless includes a wireless LAN system.

In such a wireless LAN system, a plurality of radio stations constitutes one wireless link. One radio channel is shared by radio stations contained in the wireless link (hereinafter, referred to as a channel) with CSMA/CA (Carrier Sense Multiple Access with Collision Avoidance).

According to CSMA/CA, if an interference wave power level of a signal from another radio station exceeds a certain level, each radio station determines that another radio station is using a channel and does not perform transmission.

Therfore, in order to perform communication efficiently in the radio communication system such as the wireless LAN system, it is important to select a channel so that interference waves from radio stations other than the radio stations contained in the wireless link are not received as much as possible.

The radio stations that transmit signals that cause the interference waves include two types: radio stations contained in other wireless links within local radio communication system that use the same channel; and radio stations in other radio communication systems that use the same frequency band.

A technology is proposed to avoid interference from the radio communications contained in different wireless links in such a wireless LAN system (see Ishii et al., "A Proposal of Packet DCA for Wireless LAN System", Proceedings of the 1996 Communication Society Conference of IEICE, B-652).

This technology allows any radio station to avoid interference with other radio stations in local radio communication system. When a radio station wishes to establish a new wireless link, it transmits a control packet. If the control packet returned from another radio station is received through a channel, the radio station determines that the channel is used by another radio station contained in local radio communication system. Then, the radio station selects another channel through which the control packet from another radio station is not received.

A wireless device capable of avoiding interference from other radio stations contained in a different radio communication system that use a frequency band in common is also proposed (see JPA 4-189700). The device determines if the channel is employed in another radio communication system by detecting a reception level, signal length and periodicity of a received signal and avoids the use of the channel that is employed in another radio communication system.

According to such channel selection methods in the conventional radio communication systems, an apparatus have either one of means for detecting the presence of interference from radio stations contained in local radio communication system and means for measuring interference waves from radio stations contained in other radio communication systems. Therefore, it is not possible to select a channel that enables to minimize affection of interference waves both from radio stations that belong to local radio communication system and from radio stations that belong to other radio communication systems. It is also not possible to share a frequency band efficiently by local radio communication system and other radio communication systems.

Particularly, in the former channel selection method that determines the use of channel based on the control packet, the same type of control packet is not always used in other radio communication systems. Further, the control packet from another radio communication system can not be always received and analyzed even if the same type of control packet is used because another radio communication system may use another communication format.

Therefore, it is not possible to adopt the former channel selection method for both local and other radio communication systems.

In the latter channel selection method that determines the use of channel by detecting the reception level, signal length and periodicity of the received signal, it is not possible to determine distinctively whether the interference is coming from other radio communication systems or other radio stations in local radio communication system.

Therefore, it is also not possible to adopt the latter channel selection method for both one and other radio communication systems.

In order to overcome the aforementioned disadvantages, the present invention has been made and accordingly, has an object to provide a channel selection method capable of sharing effectively a frequency band among local and other radio communication systems.

### Disclosure of Invention

The present invention has made to attain the above object and is a channel selection method for selecting a channel used for a radio communication from a plurality of selectable channels in local radio communication system, local radio communication system comprising a plurality of radio stations, the plurality of selectable channels including channels to be used also in other radio communication systems comprising a plurality of radio stations, the method comprising steps of: investigating situation concerning both use of each of the selectable channels by local radio communication system and use of the each of selectable channels by the other radio communication systems; and selecting a channel used for the radio communication in local radio communication system from the selectable channels based on the investigation.

Accordingly, a channel is selected based on both investigation of situation concerning use of each of the selectable channels by local radio communication system and investigation of situation concerning use of each of the selectable channels by the other radio communication systems.

The present invention comprises steps of detecting an interference wave power of each of said selectable channels as the investigation of situation of use of said each of selectable channels by said other radio communication systems; extracting unused selectable channels on the basis of the investigation of situation of use of said each of selectable channels by said local radio communication system; and selecting a channel having the least interference wave power from the unused selectable channels.

In the present invention, a certain reference is set beforehand, a channel used for the radio communication in local radio communication system is selected from channels having a interference wave power lower than the reference level.

In the present invention, common channels shared by local radio communication system and other radio communication systems are registered beforehand, and a channel which is not the common channel is selected preferentially.

In the present invention, a certain common reference level is set beforehand, and a channel used for the radio communication in local radio communication system is selected from common channels having interference wave power lower than the common reference level.

In the present invention, a certain restriction reference level is set beforehand, and if the interference wave power of each channel is higher than a certain reference level, a channel having interference wave power lower than a certain restriction reference level is selected and the power for the selected channel is set to a restricted transmission power which is lower than normal transmission power.

In the present invention, the common reference level, the restriction reference level, and the restricted transmission power are set individually per selectable channel.

### Brief Description of Drawings

Fig. 1 is a general diagram showing a radio communication system according to an embodiment of the present invention.
Fig. 2 is a block diagram showing a channel selection processor in a base station.
Fig. 3 is a flowchart showing a basic procedure of channel selection.
Fig. 4 is a flowchart showing a procedure to examine the use of channels in local radio communication system.
Fig. 5 is a flowchart showing another channel selection procedure.
Fig. 6 is a flowchart showing another channel selection procedure.
Fig. 7 is a flowchart showing another channel selection procedure.

### Best Mode for Carrying Out the Invention

The present invention will be explained next with reference to the drawings.

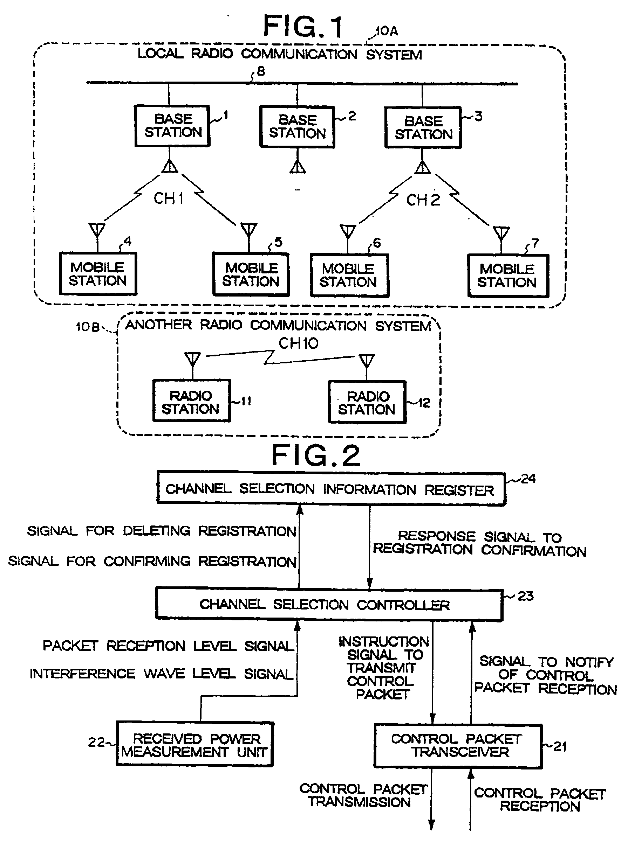

Fig. 1 is a general diagram showing a radio communication system according to an embodiment of the present invention, which includes local radio communication system 10A and another radio communication system 10B which are mixed. Local radio communication system 10A comprises a plurality of base stations including base stations 1-3 connected to wire network 8 and a plurality of mobile stations including mobile stations 4-7. Another radio communication system 10B comprises of a plurality of radio stations including radio stations 11 and 12.

The radio station herein means any radio communication equipment such as the base stations, mobile stations and the like.

The mobile stations including mobile stations 4 and 5 connect with base station 1 for communications.

Base station 1 communicates with mobile stations 4, 5 and other mobile stations that are connect with base station 1 through a single channel (CH1). Mobile stations 4, 5 and other mobile stations that are connect with base station 1 also communicate with one another through channel CH1 that is used by base station 1.

The mobile stations including mobile stations 6 and 7 connect with base station 3 for communications.

Base station 3 communicates with mobile stations 6, 7 and other mobile stations that are connect with base station 3 through a single channel (CH2). Mobile stations 6, 7 and other mobile stations that are connect with base station 3 also communicate with one another through channel CH2 that is used by base station 3.

CH1 and CH2 may be the same channel.

The channel herein means a frequency band for use in a radio communication.

On the other band, radio stations 11 and 12, that are contained in another radio communication system 10B that differs from base stations 1-3 and mobile stations 4-7, communicate through a single channel (CH10) or a plurality of channels.

Channel CH10 and a plurality of other channels used in another radio communication system 10B may be the same as those used in local radio communication system 10A, such as CH1 and CH2.

Channel CH10 and a plurality of other channels used in another radio communication system 10B may partly overlap with the channels used in local radio communication system 10A, such as CH1 and CH2, and may include the frequency bands of the plural channels used in local radio communication system 10A.

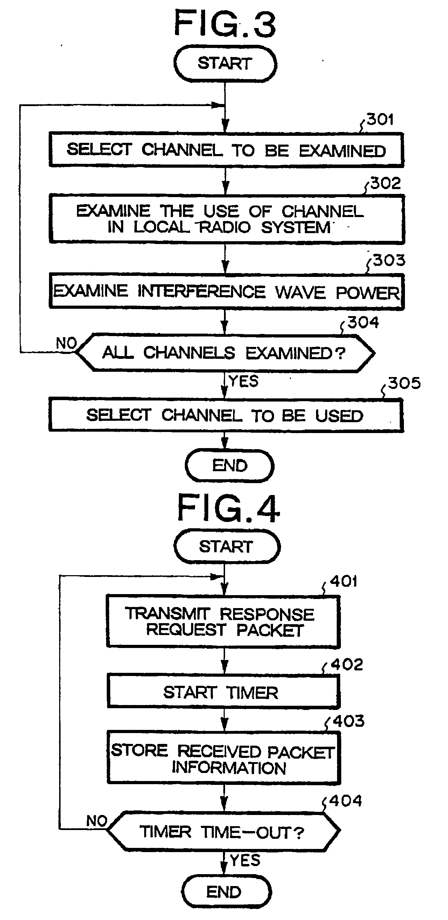

Fig. 2 is a block diagram showing a channel selection processor contained in base stations 1-3 in Fig. 1.

The channel selection processor includes control packet transceiver 21, received power measurement unit 22, channel selection controller 23 and channel selection information register 24.

Control packet transceiver 21 transmits a control packet for channel selection control in response to an instruction signal from channel selection controller 23. Upon receiving a control packet from another radio station, control packet transceiver 21 notifies the contents of the received packet to channel selection controller 23 by using a notice signal of control packet reception.

Received power measurement unit 22 monitors each radio line that is selected, that is, selectable channel, at the time of a radio communication. Received power measurement unit 22 notifies each received power per packet and an interference wave power per channel to channel selection controller 23 in the form of a packet reception level signal and a interference wave level signal, respectively.

A level of the interference wave power is herein given by obtaining a time average of received powers in respective channel.

Channel selection controller 23, based on a received state and received power of the control packet, examines the use of each selectable channel to select and set a channel for use in the local station from the selectable channels.

Channel selection information register 24 files the state of each channel notified from channel selection controller 23 by a signal for deleting registration, and stores control information which have been set per channel by a user or manufacturer. Channel selection information register 24 also notifies the state of channel by a response signal to registration confirmation in response to a registration confirmation signal from channel selection controller 23.

As for operations of the present invention, a basic procedure of channel selection at a base station will be explained next with reference to Figs. 1-3.

Channel selection at base station 2 of Fig. 1 is exemplified here.

Channel selection controller 23 of base station 2 selects arbitrary one non-examined channel from plural selectable channels (step 301). The controller 23 transmits a control packet to and receives it from other radio stations in local radio communication system 10A in order to examine the use of the channel by other radio stations in local radio communication system 10A (step 302).

Subsequently, in order to examine the use of the channel in another radio communication system 10B (and states of other radio stations in local radio communication system 10A, which could not transmit and receive the control packet due to communication environmental problems such as a long distance), the received power measurement unit 22 detects the interference wave power of the channel and channel selection controller 23 stores the power in channel selection information register 24.

Procedure orders of step 302 and step 303 may be changed to each other.

Upon making the examination of the selected channel, channel selection controller 23 determine whether or not all selectable channels have been examined (step 304). If not (step 304: NO), then a control return to step 301 for selecting another non-examined channel from plural selectable channels (step 301) to make the examination at the steps 302 and 303.

If all the selectable channels have been examined (step 304: YES), channel selection controller selects a channel based on the examined result of each channel, that is, the presence of response from radio stations in local radio communication system 10A and the level of interference wave power (step 305).

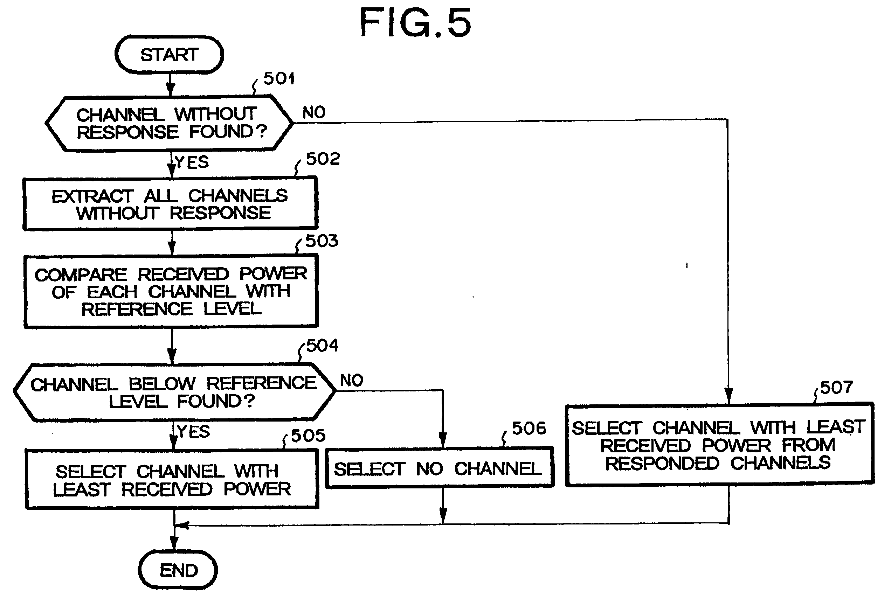

A channel selection procedure will be explained later with reference to Figs. 5-7.

Channels are thus selected based on the results that are obtained by examining the use of channels in both local radio communication system 10A and another radio communication system 10B. It is accordingly possible to select a channel while avoiding interference between local radio communication system 10A and another radio communication system 10B and to share a frequency band effectively between both radio communication systems (claim 1).

An example of procedure to examine the use of a channel in local radio communication system (step 302 in Fig. 3) will be detailed with reference to Fig. 4.

Base station 2 wishing to select a channel informs other radio stations in local radio communication system 10A of a control packet for requesting a response (hereinafter, referred to as a response request packet) using a selectable channel to be examined (step 401).

Other base stations and mobile stations in local radio communication system 10A send respective response packets in response to the received response request packet.

Base station 2 starts a timer for measuring a certain time period after sending the response request packet (step 402).

The time period measured by the timer is set in channel selection information register 24.

Thereafter, channel selection controller 23 stores the latest information with respect to each received response packet into channel selection information register 24 (step 403) until the timer times out (step 404: YES).

The information with respect to each received response packet includes both information for identifying an originated radio station such as a MAC address, and information indicating the received power of the response packed which is informed from received power measurement unit 22.

Then, a series of procedures at step 302 is finished when the timer time-outs (step 404: YES).

Alternatively, each radio station may inform of the response packet periodically as another embodiment of step 302. In this alternative, in response to reception of the response packet that is informed from another radio station, the latest information that includes a MAC address for identifying an originated radio station and a received power of the received response packet are periodically stored in channel selection information register 24 in each radio station. Thus, the transmission of the response request packet at step 401 is omitted and the procedure time is shortened.

An example of channel selection procedure based on the examined result (step 305 in Fig. 3) will be detailed next with reference to Fig. 5.

Base station 2 wishing to select a channel firstly determines whether or not there is a channel in which no response packet has been received (step 501). If there is (step 501: YES), base station 2 determines that the channel is not used by other radio stations in local radio communication system, and extracts all the channels in which no response packet has been received (step 502).

Then, channel selection controller 23 compares the interference wave power of each of extracted channels with a reference level that is previously registered with channel selection information register 24 (step 503). If there are channels of which the interference wave powers are below the reference level (step 504: YES), channel selection controller 23 selects from such channels a channel with the least interference wave power which is supposed to have the lowermost probability to be used by another radio communication system 10B (step 505). Then, channel selection controller 23 finishes a series of procedures of step 305.

If there is no channel whose interference wave power is below the reference level, channel selection controller 23 finishes a series of procedures, selecting no channel (step 506).

If the response packets are received from all the channels at step 501 (step 501: NO), channel selection controller selects a channel with the least received power among all the channels (step 507), and finish a series of procedures.

Thus, a channel with the least interference wave power is selected from the selectable channels unused in local radio communication system 10A (steps 501, 502, 505). Therefore, the channel that is not used in local radio communication system 10A and has the lowermost probability of being used in other radio communication system 10B is surely selected (claim 2).

A channel for use in a radio communication is also selected from channels whose interference wave powers are below the reference level among the selectable channels unused in local radio communication system 10A (steps 501-504). Therefore, the channel that is not used in local radio communication system 10A and has interference wave power lower than the reference level is surely selected, thereby suppressing mutual interference between local radio communication system 10A and another radio communication system 10B, resulting in an excellent radio communication (claim 3).

In addition, a channel with the least interference wave power is selected (steps 501-505). ). Therefore, the channel that is not used in local radio communication system 10A and has interference wave power lower than the reference level is surely selected, thereby minimizing mutual interference between local radio communication system 10A and another radio communication system 10B, resulting in an excellent radio communication (claims 3-9).

A channel with the least interference wave power among all the selectable channels is selected if all the selectable channels are used in local radio communication system 10A (steps 501, 507). Therefore, the channel with the lowermost probability of being used in other radio communication system 10B is surely selected even if all the selectable channels are already used in local radio communication system 10A (claim 4).

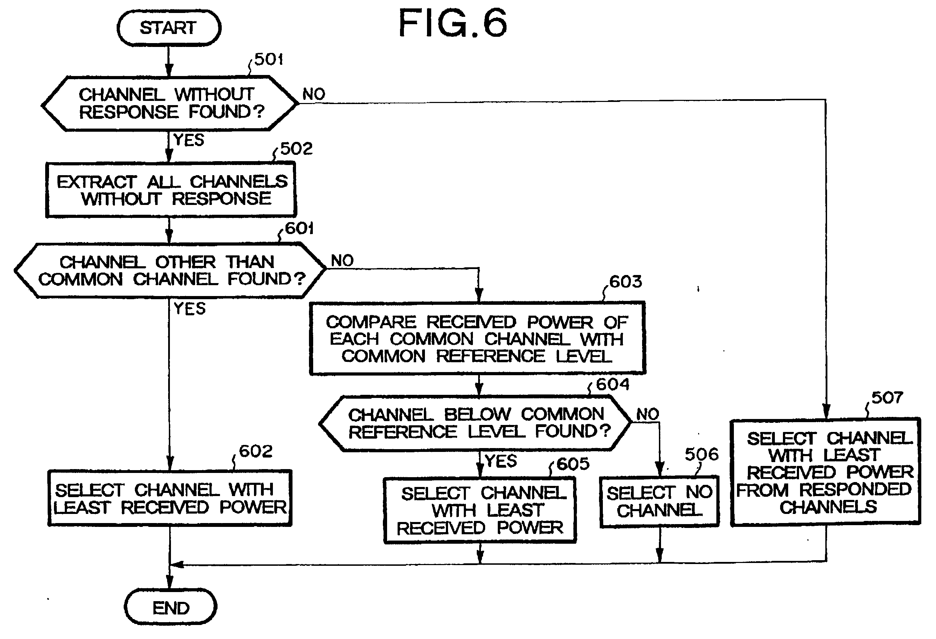

Another example of channel selection procedure based on the examined result (step 305 in Fig. 3) will be detailed next with reference to Fig. 6.

It is assumed herein that channels that may also be used in another radio communication system 10B, which are common channels, are previously registered with channel selection information register 24 as common channel information and the channels other than the common channels are not used in another radio communication system 10B.

Only steps 503-505 of Fig. 5 are changed in Fig. 6 and other steps of Fig. 5 are unchanged in Fig. 6.

If there is a channel in which no response packet has been received (step 501: YES), base station 2 wishing to select a channel firstly extracts all the channels in which no response packet has been received, which are unused channels (step 502). Then, channel selection controller 23 determines whether or not channels other than the common channels are contained in the unused channels (step 601).

If contained (step 601: YES), channel selection controller 23 selects from such channels a channel with the least interference wave power (step 602) and finish a series of procedures of step 305.

If all the unused channels are the common channels (step 601: YES), channel selection controller 23 compares interference wave powers of all the common channels with a common reference level that is registered with channel selection information register 24 (step 603).

If there are channels of which the interference wave powers are below the common reference level (step 604: YES), channel selection controller 23 selects a channel with the least interference wave power (step 605) and finish a series of procedures.

If there is no channel of which the interference wave power is below the common reference level at step 604 (step 604: NO), channel selection controller selects no channel (step 606) and finish a series of procedures.

It is also possible to proceed from step 601: YES to step 605.

In such a case where the channels that are shared with another radio communication system 10B are previously known, the channel with the least interference wave power is selected from the channels which are unused in local radio communication system 10A and other than the common channels (steps 501, 502, 601, 602). Therefore, the channel that is not used in local radio communication system 10A and another radio communication system 10B is surely selected (claim 5).

A channel for use in a radio communication is also selected from channels which are not used in local radio communication system 10A and of which the interference wave powers are below the common reference level (steps 501, 502, 601-604). Therefore, a common channel which is not used in local radio communication system 10A and of which the interference wave power is below the common reference level is surely selected, thereby suppressing mutual interference between local radio communication system 10A and another radio communication system 10B, resulting in an excellent radio communication (claim 6).

In addition, a channel with the least interference wave power is selected (steps 501, 502, 601-605). Therefore, the channel with a lower interference wave power than the common reference level is surely selected, thereby suppressing mutual interference between local radio communication system 10A and another radio communication system 10B, resulting in an excellent radio communication (claim 6-9).

The common reference level may be determined individually per channel. In this case, an optimum selective condition per channel is determined even if influence from other communication system differs among channels due to difference of a degree of overlap of frequency band with another radio communication system 10B, difference of communication format, and the number of other communication system 10B (claim 10).

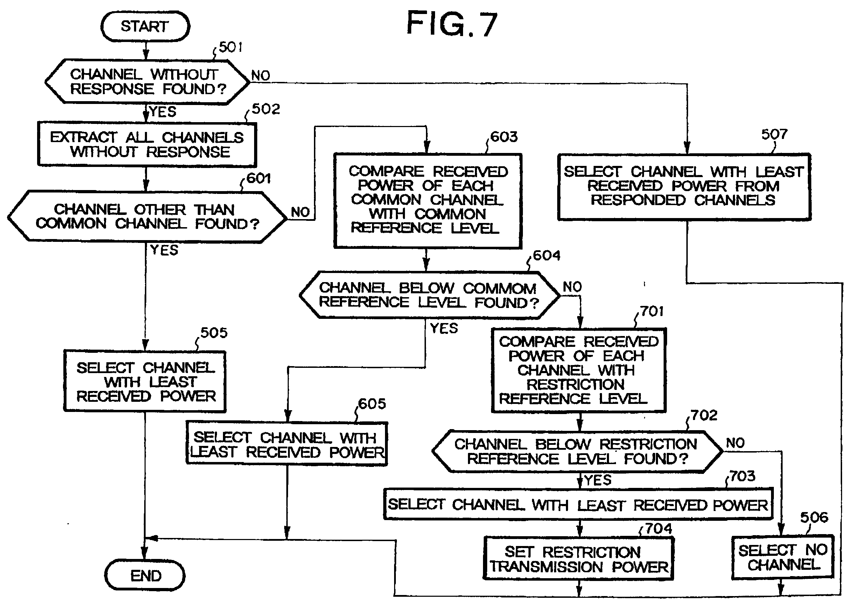

Further example of channel selection procedure based on the examined result (step 305 in Fig. 3) will be detailed next with reference to Fig. 7.

It is assumed herein that channels that are also used in another radio communication system 10B, which are common channels, are previously registered with channel selection information register 24 as common channel information, and the channels other than the common channels are not used in another radio communication system 10B.

Fig. 7 shows a substituted part for step 506 of Fig. 6 and other steps are the same as those of Fig. 6.

If all the channels that are not used in local radio communication system 10A are the common channels, and interference wave powers of all the channels that are not used in local radio communication system 10A are above the common reference level at step 604 (step 604: YES), base station 2 wishing to select a channel compares these interference wave powers with a restriction reference level that is registered with channel selection information register 24 (step 701).

If there are channels of which the interference wave powers are below the restriction reference level (step 702: YES), channel selection controller 23 selects a channel with the least interference wave power from those channels (step 703), and determines a certain restriction transmission power that is below a normal transmission power for use in this channel (step 704). Then, channel selection controller 23 finishs a series of procedures of step 305.

Thus, the influence to another radio communication system 10B is suppressed by suppressing the transmission power even when selecting the channel that is used in other radio communication system 10B (claim 8).

A modification of step 506 of Fig. 6 is exemplified in Fig. 7, however, step 506 of Fig. 5 also may be modified in the same way to take the same effects (claim 7).

On the other hand, if there is no channel of which the interference wave power is below the restriction reference level (step 702: NO), channel selection controller 23 selects no channel (step 506) and finish a series of procedures.

The restriction reference level may be determined individually per channel (claim 11). The restriction transmission power of the channel to be used may also be determined individually per channel. In this case, an optimum selective condition per channel is determined even if influence from other communication system differs among channels due to difference of a degree of overlap of frequency band with another radio communication system 10B, difference of communication format, and the number of other communication system 10B (claim 12).

### Industrial Applicability

As explained above, the present invention examines both the use of each selectable channel in local radio communication system and the use of each selectable channel in other radio communication systems, and based on the results selects a channel for use in a radio communication.

Therefore, it is possible to select a channel for use in a radio communication at local radio communication system and to employ a frequency band efficiently in both radio communication systems by avoiding interference between other radio stations in local radio communication system and other radio stations in other radio communication systems as far as possible even if a plurality of mixed radio communication systems are present.

## Claims

1. A channel selection method for selecting a channel used for a radio communication from a plurality of selectable channels in local radio communication system, said local radio communication system comprising a plurality of radio stations, said plurality of selectable channels including channels to be used also in other radio communication systems comprising a plurality of radio stations, said method comprising steps of:
investigating situation concerning both use of each of said selectable channels by said local radio communication system and use of said each of selectable channels by said other radio communication systems; and
selecting a channel used for the radio communication in said local radio communication system from said selectable channels based on the investigation.

2. The channel selection method according to claim 1, comprising steps of:
detecting an interference wave power of each of said selectable channels as the investigation of situation of use of said each of selectable channels by said other radio communication systems;
extracting unused selectable channels on the basis of the investigation of situation of use of said each of selectable channels by said local radio communication system; and
selecting a channel having the least interference wave power from the unused selectable channels.

3. The channel selection method according to claim 1, comprising steps of:
detecting an interference wave power of each of said selectable channels as the investigation of situation of use of said each of selectable channels by said other radio communication systems;
extracting a channel having an interference wave power lower than a certain reference level from unused selectable channels in said local radio communication system, said unused selectable channels being confirmed on the basis of the situation of use of selectable channels by said local radio communication system; and
selecting a channel used for the radio communication in said local radio communication system from the extracted channels.

4. The channel selection method according to claim 1, comprising steps of:
detecting an interference wave power of each of said selectable channels as the investigation of situation of use of said each of selectable channels by said other radio communication systems; and
selecting a channel having the least interference wave power if all selectable channels are confirmed as being used by said local radio communication system on the basis of the situation of use of selectable channels by said local radio communication system.

5. The channel selection method according to claim 1, comprising steps of:
registering information on common channels to be shared by said local radio communication system and said other radio communication systems beforehand;
detecting an interference wave power of each of said selectable channels as the investigation of situation of use of said each of selectable channels by said other radio communication systems;
extracting channels not registered as said common channel from unused selectable channels in said local radio communication system, said unused selectable channels being confirmed on the basis of the situation of use of selectable channels by said local radio communication system; and
selecting a channel having the least interference wave power from said extracted channels.

6. The channel selection method according to claim 5, comprising steps of:
extracting channels having an interference wave power lower than a predetermined common reference level from unused selectable channels in said local radio communication system if all of said unused selectable channels in local radio communication system are said common channels;
and
selecting a channel used for the radio communication in said local radio communication system from the extracted channels having an interference wave power lower than a predetermined common reference level.

7. The channel selection method according to claim 3, comprising steps of:
setting a certain restriction reference level higher than said reference level beforehand;
extracting a channel having an interference wave power lower than said restriction reference level from the unused selectable channels in said local radio communication system if there are no channels having an interference wave power lower than said reference level in the unused selectable channels in said local radio communication system; and
selecting a channel used for the radio communication in said local radio communication system from said extracted channels having an interference wave power lower than said restriction reference level but not lower than said reference level and setting a transmission power for the selected channel to a restricted transmission power which is lower than a normal transmission power.

8. The channel selection method according to claim 6, comprising steps of:
setting a certain restriction reference level higher than said common reference level beforehand;
extracting a channel having an interference wave power lower than said restriction reference level from the unused selectable channels in said local radio communication system if there are no channels having an interference wave power lower than said common reference level in the unused selectable channels in said local radio communication system; and
selecting a channel used for the radio communication in said local radio communication system from the extracted channels having an interference wave power lower than said restriction reference level but not lower than said common reference level and setting transmission power for the selected channel to a restricted transmission power which is lower than a normal transmission power.

9. The channel selection method according to any one of claims 3, 6-8, comprising steps of:
selecting a channel having the least interference wave power from the extracted channels as a channel used for the radio communication in said local radio communication system.

10. The channel selection method according to claim 6 or 8, wherein said common reference level is set individually per selectable channel.

11. The channel selection method according to claim 7 or 8, wherein said restriction reference level is set individually per selectable channel.

12. The channel selection method according to claim 7 or 8, wherein said restricted transmission power is set individually per selectable channel.
